# EUROPEAN PATENT APPLICATION

(11) **EP 2 527 707 A1**
(43) Date of publication of application: **28.11.2012**
(21) Application number: 11167712.6
(22) Date of filing: 26.05.2011
(51) Int. Cl.: F16L 55/26, G01N 29/265, G01N 29/28

(54) **Apparatus for pipeline inspection**

(71) Applicant: Pii Limited, Cramlington, Northumberland NE23 1WW (GB)
(72) Inventor: Herron, William, Northumberland NE23 1WW (GB); Palma, Robert, Northumberland NE23 1WW (GB)
(74) Representative: McWilliams, David John

(57) **Abstract**

An apparatus (10) for pipeline inspection includes a sensor unit (14) having an array of ultrasonic sensors (16) for inspecting a pipe wall. The sensor unit (14) has a skid (18) with an outer surface (20) intended to run adjacent or in contact with a pipe wall. The sensors (16) are mounted at a predetermined stand off from the outer surface (20) of the skid (18). The ultrasonic sensors (16) are mounted in a chamber (44) filled with ultrasonic couplant (e.g. a liquid or gel), for permitting communication between the sensors and the inner surface of a pipe wall. The skid (18) defines a membrane region (52) over the sensors (16). The membrane region (52) is intended to be pushed against an internal wall of a pipeline, and has a rigid periphery for maintaining a predetermined stand off between the outer surface (20) of the skid (18) and the upper surface (42) of the sensors.

## Description

The present disclosure relates to a pipeline inspection apparatus.

It is known to carry out inspection of a pipeline using an apparatus (commonly referred to as a pipeline "pig"), which travels inside the pipeline to measure or detect defects in the wall of the pipeline.

Such an apparatus may include an array of ultrasonic sensors for measuring the wall thickness of the pipeline and/or for detecting cracks in the wall of a pipeline. Typically, the ultrasonic sensors are mounted on a skid, which is designed to run adjacent or in contact with a pipe wall, e.g. as a pig carries out an inspection run through a pipeline. The sensors are arranged at a stand off from the outer surface of the skid, in order to protect the sensors against wear or other damage from contact with the pipe wall.

There is a problem that conventional pigs with ultrasonic sensors are only suitable for use in liquid-filled pipelines, wherein the liquid in the pipeline provides a couple medium for transferring ultrasonic waves from the ultrasonic sensors to the pipe wall. It is not possible to carry out an inspection run using a conventional ultrasonic inspection arrangement in a gas-filled line.

The disclosure proposes a pipeline apparatus which overcomes or mitigates one or more of the above problems, or other disadvantages or problems associated with conventional skids for inline inspection of pipelines using ultrasonic sensors.

The disclosure provides an apparatus for pipeline inspection, the apparatus comprising a body having a longitudinal axis, an array of ultrasonic sensors associated with said body for inspecting a pipe wall, and a skid associated with said array of sensors, the skid having an outer surface intended to run adjacent or in contact with a pipe wall, wherein the sensors are arranged at a stand off from the outer surface of the skid, further wherein the apparatus comprises a chamber which contains an ultrasonic couplant, wherein the chamber is arranged for permitting ultrasound communication between the sensors and the inner surface of a pipe wall, via the ultrasonic couplant.

In exemplary embodiments, the apparatus includes a mechanism for biasing the outer surface of the skid into contact with a pipe wall.

In exemplary embodiments, said mechanism is configured for permitting movement of the skid between a first position and a second position relative to the longitudinal axis in response to changes in pipe diameter, e.g. outwards in response to an increase in pipe diameter and/or inwards in response to a decrease in pipe diameter.

In exemplary embodiments, the mechanism is configured for movement of the skid between an extended position (e.g. for inspection of a pipe line having a first diameter) and a retracted position (e.g. for inspection of the same or a different pipe line having a second diameter).

In exemplary embodiments, the mechanism is configured for biasing the skid in the direction of a pipe wall in said extended position and said retracted position. In exemplary embodiments, the mechanism is configured for biasing the skid in the direction of a pipe wall in one or more positions intermediate said extended position and said retracted position.

In exemplary embodiments, said mechanism includes suspension members configured for biasing the skid outwards (e.g. in a radial direction). In exemplary embodiments, the mechanism includes first and second suspension members axially off set from one another with respect to the longitudinal axis of the body. Said first and second suspension members may be configured to pivot relative to said longitudinal axis of the body.

In exemplary embodiments, said suspension members form part of a linkage configured for movement of the skid with respect to the longitudinal axis of the body, e.g. between a first position and a second position in response to changes in pipe diameter.

In exemplary embodiments, said mechanism defines a collapsible linkage arranged to permit inward movement of the skid with respect to the longitudinal axis of the body (e.g. in a radial direction) in response to a decrease in pipe diameter.

In exemplary embodiments, the linkage includes a carrier for the skid, wherein the linkage is configured for biasing the carrier in the direction of a pipe wall through changes in pipe diameter.

In exemplary embodiments, the skid is mounted on said carrier and is locally biased in an outward direction on said carrier, e.g. via biasing elements on said carrier. In an exemplary embodiment, the skid is mounted on said carrier and the carrier includes spring elements (e.g. leaf springs arranged to act on an underside of the sensor unit), for biasing the skid in an outward direction relative to the longitudinal axis of the body.

In exemplary embodiments, said linkage includes first and second suspension members arranged to pivot relative to said longitudinal axis of the body, for movement of the carrier relative to the longitudinal axis of the body.

In exemplary embodiments, the skid is mounted on a carrier, said carrier is mounted between first and second suspension members for biasing the outer surface of the skid into contact with a pipe wall and arranged to pivot relative to said longitudinal axis of the body, for movement of the skid between a first position and a second position in response to changes in pipe diameter.

In exemplary embodiments, said carrier includes biasing elements for locally biasing the skid in an outward direction. In exemplary embodiments, said carrier is arranged for movement with said first and second suspension members, and said carrier is arranged to remain parallel with said longitudinal axis of the body during movement of the skid in response to changes in pipe diameter.

In exemplary embodiments, said array of sensors forms part of a sensor unit on the apparatus, each sensor unit having a respective skid biased for contact with a pipe wall. In exemplary embodiments, the apparatus includes multiple sensor units movably mounted on said body in response to changes in pipe diameter. The multiple sensor units may be arranged in one or more rings about the longitudinal axis of the body.

The disclosure further provides a method of pipeline inspection, the method comprising the steps of providing an apparatus for inline inspection of a pipeline, the apparatus including an array of ultrasonic sensors configured for inspection of a pipe wall; placing the apparatus in a pipeline containing a gas medium; running the apparatus along the pipeline within the gas medium and using said ultrasonic sensors to inspect a wall of the pipeline as the apparatus is travelling within the gas medium; wherein the sensors are positioned adjacent an inner surface of the pipeline as the apparatus travels along the pipeline; and wherein the apparatus includes an ultrasonic couplant which is provided between the ultrasonic sensors and the outer surface of the skid, for permitting ultrasound communication between the sensors and the inner surface of the pipeline.

The method may utilise an apparatus as set forth above.

The accompanying drawings, which are incorporated in and constitute a part of the specification, illustrate one or more embodiments and, together with the description, explain these embodiments. In the drawings:
Figure 1 is a schematic perspective view of a vessel forming part of an apparatus for pipeline inspection;
Figure 2 is a schematic perspective view of a sensor unit and carrier for use in the embodiment of Figure 1;
Figure 3 is a schematic perspective view of the carrier in Figures 1 and 2;
Figure 4 is a schematic perspective view of a vessel similar to the vessel in Figure 1, but including multiple sensor units;
Figure 5 is a schematic diagram showing a vessel of the kind shown in Figure 4 operable through a pipeline having multiple bore diameters; and
Figure 6 is a schematic perspective view of an alternative sensor unit and carrier for use in the embodiment of Figure 1;

The following description of the exemplary embodiments refers to the accompanying drawings. The same reference numbers in different drawings identify the same or similar elements. The following detailed description does not limit the invention. Instead, the scope of the invention is defined by the appended claims.

Reference throughout the disclosure to "an exemplary embodiment," "an embodiment," or variations thereof means that a particular feature, structure, or characteristic described in connection with an embodiment is included in at least one embodiment of the subject matter disclosed. Thus, the appearance of the phrases "in an exemplary embodiment," "in an embodiment," or variations thereof in various places throughout the disclosure is not necessarily referring to the same embodiment. Further, the particular features, structures or characteristics may be combined in any suitable manner in one or more embodiments.

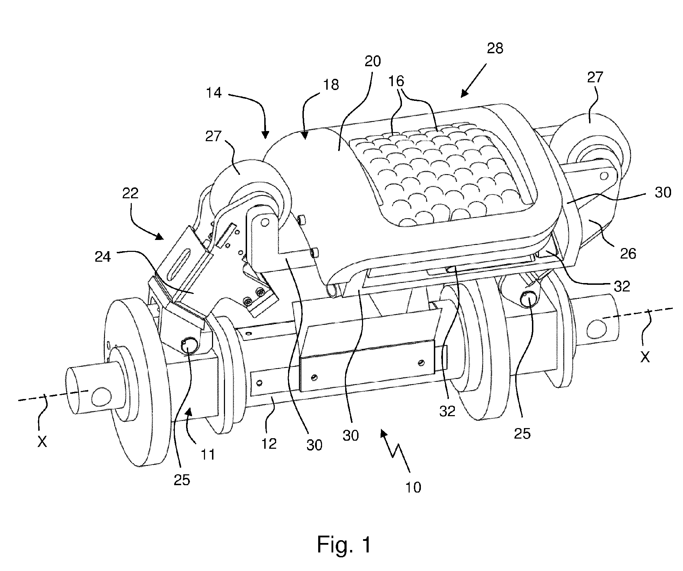

Referring firstly to Figure 1, part of a pipeline inspection apparatus for in-line inspection of pipelines is indicated generally at 10.

The apparatus 10 includes a vessel 11 having a central body 12 and a longitudinal axis X (extending left to right as viewed in Figure 1). A sensor unit 14 is mounted on said body 12. The sensor unit 14 includes an array of ultrasonic sensors 16 for inspecting a pipe wall.

The sensor unit 14 includes a skid 18 having an outer surface 20 intended to run adjacent or in contact with a pipe wall, in use. The outer surface 20 is arcuate in a circumferential direction with respect to the longitudinal axis X. The sensors 16 also define an arcuate inspection plane in a circumferential direction with respect to the longitudinal axis X.

The upper surface of the sensors is arranged at a stand off from the outer surface of the skid 18 (e.g. radially inward of the outer surface 20), for protecting the sensors 16 against wear or other damage from contact with the pipe wall.

The ultrasonic sensors 16 within the inspection array can be orientated normally to the pipe wall for wall thickness evaluation or at an angle to the pipe wall so as to induce shear waves and identify any cracks in the pipeline, for example.

The apparatus 10 includes a spring-loaded mechanism 22 for permitting movement of the sensor unit 14 with respect to the longitudinal axis of the central body 12, e.g. in response to changes in bore diameter.

The mechanism 22 is configured for biasing the sensor unit 14 in a generally radial direction, in order to bias the outer surface 20 of the skid 18 in the direction of a pipe wall. More particularly, the mechanism 22 is configured for moving the sensor unit 14 between a first radial position (e.g. a retracted position for use in a small diameter bore) and a second radial position (e.g. an extended position for use in a large diameter bore), in response to changes in pipe diameter. The mechanism 22 is configured to position the sensor unit 14 at an appropriate radial position (e.g. intermediate said first and second radial positions), depending on the size of the bore through which the apparatus 10 is passing. Hence, the apparatus 10 can be used for inspection of multi-diameter pipelines or across a range of pipelines having different diameters.

The mechanism 22 includes first and second suspension members 24, 26 configured for biasing the sensor unit 14 in the direction of a pipe wall (e.g. in a radial or outward direction relative to the longitudinal axis X). The first and second suspension members 24, 26 are axially off set from one another, with respect to the longitudinal axis of the central body 12.

The first and second suspension members 24, 26 are connected to body 12 by a spring-biased pivotal connection 25, so as to be configured to pivot relative to said longitudinal axis of the central body 12. The suspension members 24, 26 are biased towards said second radial position (i.e. an extended position relative to the body 12). Hence, the suspension members 24, 26 act as spring-biased struts or arms which are movable relative to the central body 12 of the vessel 11, for positioning the sensor unit 14 adjacent the pipe wall.

A roller 27 is provided at the end of each suspension member 24, 26, for rolling contact with the internal surface of a pipe along which the apparatus is travelling, in use.

The first and second suspension members 24, 26 form part of a linkage 28, which is configured for movement of the sensor unit 14 radially with respect to the longitudinal axis of the central body 12, e.g. between the first radial position and second radial position, in response to changes in bore diameter as the suspension rollers 27 react against the pipe wall.

The linkage 28 includes a carrier 30 arranged for movement with said first and second suspension members 24, 26. The sensor unit 14 is mounted on said carrier 30.

The carrier 30 is mounted between the first and second suspension members 24, 26, and the carrier 30 is arranged to remain parallel with the longitudinal axis of the central body 12 during movement of the sensor unit 14.

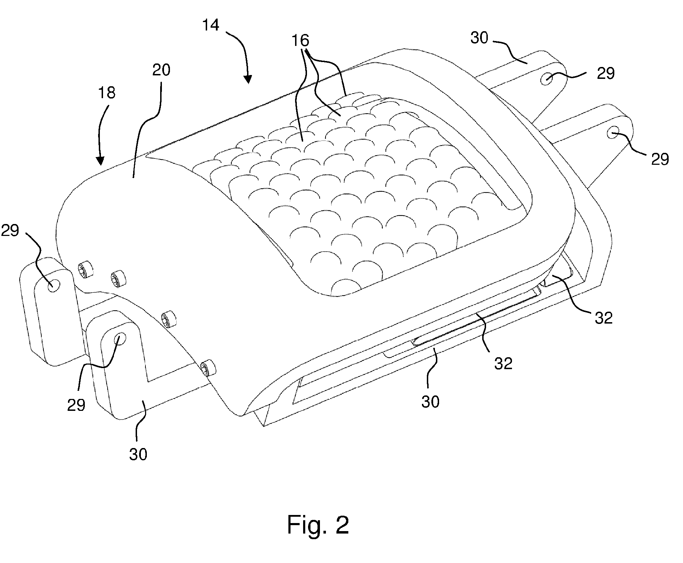

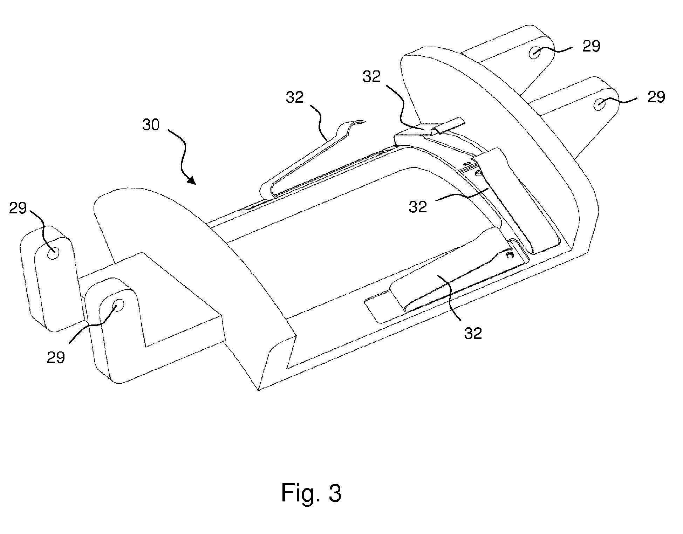

As can be seen clearly in Figures 2 and 3, the carrier 30 includes pivot points 29 for connection to the first and second suspension members 24, 26.

As can be seen most clearly in Figure 3, the carrier 30 biasing elements in the form of leaf springs 32, which are arranged beneath the sensor unit 14. The biasing elements provide local biasing of the sensor unit 14 relative to the longitudinal axis of the central body 12, e.g. in the direction of the pipe wall.

The spring-loaded mechanism 22 ensures that the sensors 16 are deployed adjacent the pipe wall, even in bends (where conventional systems fail or are highly unreliable). Moreover, the localised biasing of the sensor unit 14 on the carrier 30 assists in providing correct orientation and clamping force of the skid 18 against the pipe wall.

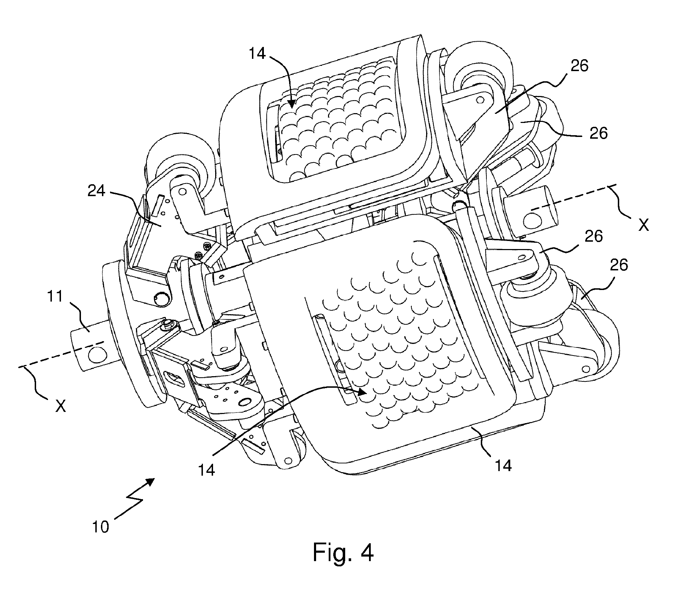

As shown in Figure 4, the vessel 11 may be provided with multiple sensor units 14, each of which is movably mounted on said central body 12 in the manner described above. In the exemplary embodiment of Figure 4, the vessel 11 includes four sensor units (only 3 of which are visible as viewed in Figure 4) arranged at 90 degrees to one another in a ring about the longitudinal axis X.

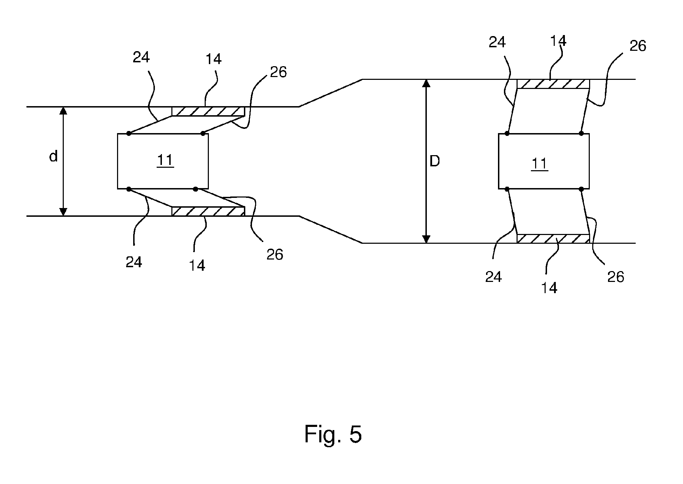

The apparatus 10 is suited for use inspecting a pipeline having a first section with a first bore diameter and a second section with a second bore diameter (i.e. less than or greater than the first bore diameter). The apparatus 10 can be sent on a continuous run through said first and second sections of the pipeline. The mechanism 22 is used to bias the sensor unit 14 against an inner surface of the first section and to automatically bias the sensor unit 14 against an inner surface of the second section upon a change in bore diameter between said first and second sections of the pipeline. An example is shown in Figure 5.

The apparatus 10 permits accurate modelling of the biasing forces required to maintain the skid 18 in contact with the pipe wall, providing a significant improvement over conventional skid designs.

The apparatus 10 is advantageous, at least insofar as it should reduce the time required to design a skid for a given diameter of pipe, by allowing the required forces to be calculated in an early stage in the design procedure, reducing or obviating the need for optimisation loops and other acts of trial and error.

Moreover, the linkage 28 permits use of the apparatus across a range of pipeline diameters, including improved tracking of the pipe bore, especially in bends and through restrictive pipeline features such as tapers, valves, etc.

Each linkage 28 can move independently with respect to the other linkages 28 on the vessel 11. This enables the apparatus to pass through and inspect tight bend diameters and difficult or restrictive pipeline features such as tapers, valves, etc. It is envisaged that exemplary embodiments will be cable of inspection through 1D bends and mitre bends.

In the exemplary embodiment of Figure 1, the linkage 28 takes the form of a 4-bar linkage, consisting of the body 12, suspension members 24, 26 and carrier 30. Other forms of collapsible linkage may be applicable, e.g. a 5-bar linkage including said suspension members 24, 26, configured to ensure that the sensor unit 14 tracks the pipe wall irrespective of the attitude of the internal pig body 12 within the pipeline.

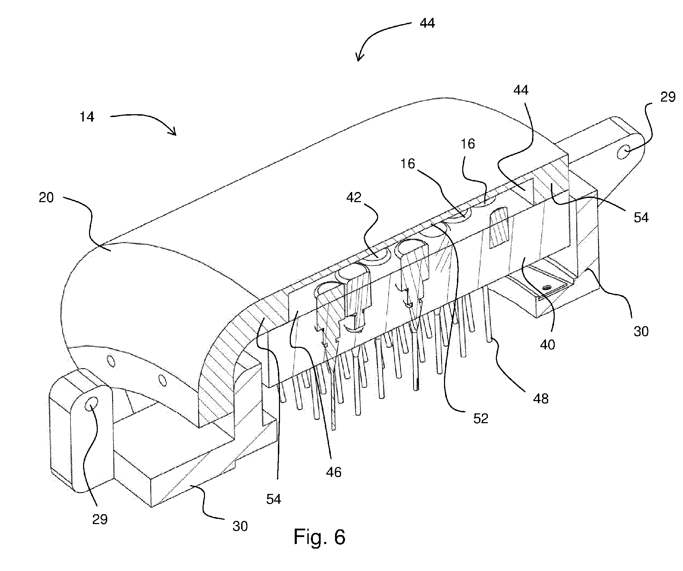

An alternative carrier 30 and sensor unit 14 for use with the apparatus 10 of Figure 1 is shown in Figure 6.

The carrier 30 is substantially the same as the carrier in Figure 1, and includes pivot points 29 for connection to the first and second suspension members 24, 26. This enables the carrier 30 to remain substantially parallel with the longitudinal axis X of the vessel 11 on which the carrier 30 is mounted, during outward movement of the sensor unit 14 under the action of the suspension arms 24, 26.

A sensor unit 14 is mounted on the carrier 30. The sensor unit 14 includes a plurality of ultrasonic sensors 16 held in a tight array of rows and columns on a sensor holder 40. An upper surface 42 of each sensor 16 projects from the sensor holder 40 by a predetermined amount. The upper surfaces 42 of the sensors 16 define an arcuate inspection plane in a circumferential direction with respect to the longitudinal axis X of the vessel 11 on which the sensor holder 40 is mounted.

The sensor unit 14 includes a skid 18 having an outer surface 20 intended to run adjacent or in contact with a pipe wall, in use. The outer surface 20 is arcuate in a circumferential direction with respect to the longitudinal axis X of the vessel 11 on which the sensor unit 14 is mounted.

The skid 18 defines a sealed chamber 44 over the inspection plane of the sensors 16 and the upper surface 46 of the sensor holder 40, with the upper surface 42 of the sensors 16 arranged at a predetermined distance from the outer surface of the skid 18.

Each sensor 16 is sealing embedded on the sensor holder 40, with an output end 48 of the sensor 16 projecting from an underside 50 of the sensor holder 40.

The skid 18 defines a membrane region 52 over the sensors 16, to be pushed up against the internal wall of a pipeline. The chamber 44 is filled with liquid (oil, gel, etc.), which acts as couple medium between the ultrasonic sensors 16 and the internal wall of the pipeline. Hence, the apparatus is suitable for use in gas filled pipe lines, provided that the membrane region 52 of the outer surface 20 of the skid 18 is in contact with the pipe wall. The biasing mechanism 22 and local biasing of the sensor unit 14 on the carrier assist with this.

The membrane region 52 is both wear and impact/tear resistant, for maintaining a sealed chamber 44 for the ultrasonic couplant. A periphery of the membrane region 52 may be of increased rigidity (e.g. relative to the rigidity of the membrane region 52), for maintaining the desired stand off between the outer surface 20 of the skid 18 and the upper surface 42 of the sensors 16.

In exemplary embodiments, the ultrasonic couplant is a fixed volume within the chamber 44, or can be pumped/circulated over the sensors 16, to control the contact pressure of the membrane between the pipe wall and ultrasonic couplant.

Although Figure 1 is described with spring-loaded suspension members in the form of pivotable arms or struts, other types of suspension may be employed. Although Figure 3 is described with leaf springs for local biasing of the sensor unit on the carrier, other forms of resilient biasing element may be incorporated. Although Figure 4 shows an embodiment having a ring of four sensor units, other embodiments may consist of three or more sensor units per ring. Multiple rings of sensor units may be included per vessel 11.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended and are understood to be within the scope of the claims.

## Claims

1. Apparatus for pipeline inspection, the apparatus comprising a body having a longitudinal axis, an array of ultrasonic sensors associated with said body for inspecting a pipe wall, and a skid associated with said array of sensors, the skid having an outer surface intended to run adjacent or in contact with a pipe wall, wherein the sensors are arranged at a stand off from the outer surface of the skid,
further wherein the apparatus comprises a chamber which contains an ultrasonic couplant, wherein the chamber is arranged for permitting ultrasound communication between the sensors and the inner surface of a pipe wall, via the ultrasonic couplant.

2. Apparatus according to claim 1 wherein the ultrasonic couplant consists of a liquid, gel, or like substance.

3. Apparatus according to claim 1 wherein the chamber forms part of the skid.

4. Apparatus according to claim 3 wherein the chamber includes a membrane region which extends over the sensors, said membrane region forming part of the outer surface of the skid.

5. Apparatus according to claim 4 wherein the skid defines a peripheral region around said membrane region, and said peripheral region is of increased rigidity relative to the rigidity of the membrane region, for maintaining a predetermined stand off between the outer surface of the skid and the ultrasonic sensors.

6. Apparatus according to claim 1 wherein the apparatus includes a sensor holder, and the ultrasonic sensors are held in the array by said sensor holder, further wherein a surface of the sensor holder defines a wall of said chamber.

7. Apparatus according to claim 1 wherein the apparatus includes a mechanism for biasing the outer surface of the skid into contact with a pipe wall, for communication between the sensors and the pipe wall via the ultrasonic couplant.

8. Apparatus according to claim 7 wherein the mechanism is configured for permitting movement of the skid between a first position and a second position relative to the longitudinal axis in response to changes in pipe diameter.

9. Apparatus according to claim 7 wherein the mechanism includes a strut for deploying the skid in an extended position relative to the longitudinal axis of the body.

10. Apparatus according to claim 7 wherein the mechanism defines a collapsible linkage arranged to permit inward movement of the skid with respect to the longitudinal axis of the body in response to a decrease in pipe diameter.

11. Apparatus according to claim 10 wherein the linkage includes a carrier and the sensors and skid are mounted on the carrier, further wherein the linkage is configured for biasing the carrier in the direction of a pipe wall through changes in pipe diameter.

12. Apparatus according to claim 11 wherein the skid is locally biased in an outward direction on said carrier.

13. Apparatus according to claim 1 wherein the sensors and skid are mounted on a carrier, said carrier is mounted between first and second suspension members, and said first and second suspension members are arranged to pivot relative to said longitudinal axis of the body, for moving the skid between a first radial position and a second radial position in response to changes in pipe diameter, and for biasing the outer surface of the skid into contact with a pipe wall in said first and second radial positions, for communication between the sensors and the pipe wall via the ultrasonic couplant.

14. A method of pipeline inspection, the method comprising the steps of providing an apparatus for inline inspection of a pipeline, the apparatus including an array of ultrasonic sensors configured for inspection of a pipe wall; placing the apparatus in a pipeline containing a gas medium; running the apparatus along the pipeline within the gas medium and using said ultrasonic sensors to inspect a wall of the pipeline as the apparatus is travelling within the gas medium; wherein the sensors are positioned adjacent an inner surface of the pipeline as the apparatus travels along the pipeline; and wherein the apparatus includes an ultrasonic couplant which is provided between the ultrasonic sensors and the outer surface of the skid, for permitting ultrasound communication between the sensors and the inner surface of the pipeline.

15. A method according to claim 14 wherein the apparatus is in accordance with any of claims 1 to 13.
